# EUROPEAN PATENT SPECIFICATION

(11) **EP 3 901 015 B1**
(45) Date of publication and mention of the grant of the patent: **14.06.2023**
(21) Application number: 21166955.1
(22) Date of filing: 06.04.2021
(51) Int. Cl.: B62J 6/025, B62J 17/02

(54) **STRADDLED VEHICLE**
GRÄTSCHSITZFAHRZEUG
VÉHICULE À ENFOURCHER

(30) Priority: 21.04.2020 JP 2020075744
(43) Date of publication of application: 27.10.2021
(73) Proprietor: Yamaha Hatsudoki Kabushiki Kaisha, Iwata-shi, Shizuoka 438-8501 (JP)
(72) Inventor: SAIJO, Yuta, Iwata-shi, 438-8501 (JP)
(74) Representative: Di Sciuva, Michele

(56) References cited:
- JP-A- 2010 083 202
- TW-A- 201 313 531

## Description

### BACKGROUND

### Field of the Invention

The present invention relates to a straddled vehicle.

### Background Information

A straddled vehicle includes a headlight unit. The headlight unit includes an adjustment portion for adjusting the optical axis thereof. For example, in a straddled vehicle described in Publication of Japan Patent No. 5033748, a headlight unit is disposed in a handle cover. The headlight unit includes an adjustment bolt for adjusting the optical axis thereof. Besides, the handle cover is provided with an opening in a rear portion thereof. In adjusting the optical axis, a tool is inserted into the interior of the handle cover through the opening. Then, the adjustment bolt is turned by the tool pressed against the head thereof, whereby the optical axis of the headlight unit is adjusted.

### SUMMARY

To inhibit water from intruding into the interior of the handle cover, it is desirable to make the opening as small as possible. In this case, however, the adjustment portion is made less visible from outside, whereby workability is degraded in adjusting the optical axis. For example, a plurality of steps have been required so far to adjust the optical axis as follows. First, for reliably achieving good workability, a handle is turned and set in place to make the adjustment portion visible. Next, the adjustment portion is operated by the tool to adjust the optical axis. Then, the handle is returned to a middle position to check the optical axis. If the optical axis is displaced from an appropriate position, the steps described above are repeated until the optical axis reaches the appropriate position. Thus, many steps are required to adjust the optical axis.

Besides, for making the tool reach the adjustment portion, it is required to reliably produce a space for inserting the tool (hereinafter referred to as "tool path") from the opening to the adjustment portion. By changing the layout of members disposed in the interior of the handle cover, interference can be avoided between the members and the tool path. In this case, however, the members are required to be disposed at intervals, whereby increase in size of the handle cover is inevitable. JP-A-2010083202 and TW-A-201313531 disclose a straddle vehicle according to the preamble of claim 1.

It is an object of the present invention to inhibit increase in size of a handle cover and simultaneously enhance workability in adjusting an optical axis in a straddled vehicle.

A straddled vehicle according to an aspect of the present invention includes a head pipe, a front fork, a front cover, a leg shield, a front wheel, a handle member, a lever, a handle cover, and a headlight unit. The front fork is supported by the head pipe so as to be turnable. The front cover is disposed in front of the head pipe. The leg shield is disposed behind the front cover. The front wheel is supported by the front fork so as to be rotatable. The handle member is connected to the front fork. The lever is attached to the handle member. The handle cover includes a front portion, a rear portion, and a lateral portion. The front portion is disposed in front of the handle member. The rear portion is disposed behind the handle member. The lateral portion connects the front portion and the rear portion. The handle cover is turned together with the handle member. The headlight unit is provided in the handle cover. The lateral portion of the handle cover includes an opening. Either or both of the handle member and the lever protrude from the opening. The headlight unit includes an adjustment portion. The adjustment portion is operable to adjust an optical axis of the headlight unit. The adjustment portion is disposed in place to be visible from outside the opening.

In the straddled vehicle according to the present aspect, the adjustment portion is visible through the opening through which either or both of the handle member and the lever are inserted. In other words, a tool path can be reliably produced by utilizing a space for laying either or both of the handle member and the lever, said tool path being a space for inserting a tool from said opening to said adjustment portion. Accordingly, increase in size of the handle cover can be inhibited. Besides, the opening for inserting either or both of the handle member and the lever is larger than an opening conventionally provided for inserting a tool. Because of this, the adjustment portion is easily visible through the opening. Accordingly, workability can be enhanced in adjusting the optical axis. Moreover, due to the large-sized opening, the optical axis can be checked, while the adjustment portion is visually observed and adjusted through the opening. Because of this, workability can be further enhanced in adjusting the optical axis. For example, the optical axis of the headlight unit is adjustable, while the adjustment portion is adjusted by the tool, with the handle member being disposed in a middle position. Because of this, it is possible to reduce the number of steps required for adjusting the optical axis.

The adjustment portion may be disposed in place to overlap the opening as seen in a vehicle side view. In this case, the adjustment portion is easily visible through the opening.

The lever may protrude from the opening. The adjustment portion may be disposed in place not to overlap a movable range of the lever as seen in the vehicle side view. In this case, the adjustment portion is easily visible without being interfered by the lever.

The adjustment portion may be visible through the opening as seen in the vehicle side view. In this case, the adjustment portion is easily visible through the opening.

The straddled vehicle may further include a switch operable by a driver. The handle member may include a handlebar, a grip, and an operating portion. The grip may be attached to the handlebar. The operating portion may be attached to the handlebar, while being disposed lateral to the grip. The switch may be disposed on the operating portion. In this case, when the handle cover is made compact in a right-and-left direction, the adjustment portion can be disposed in a close position to the opening in the right-and-left direction. Because of this, the tool math is shortened, and simultaneously, the adjustment portion is enhanced in visibility through the opening. Accordingly, operating the adjustment portion is made easy.

The straddled vehicle may further include a cable extending from the lever into an interior of the handle cover. The cable may run above the adjustment portion. In this case, the adjustment portion is operable without being interfered by the cable.

The cable may bend downward at a laterally inner position than the adjustment portion. In this case, even when the cable sags by operating the lever, the adjustment portion is operable without being interfered by the cable.

The straddled vehicle may further include a harness. The harness may be disposed at least in part along the handle member. The harness may run below the adjustment portion. In this case, the adjustment portion is operable without being interfered by the harness.

The adjustment portion may be disposed on a rear surface of the headlight unit. The rear surface of the headlight unit may be located at least in part on a more front side than the lever as seen in the vehicle side view. In this case, access to the adjustment portion is made easy.

The headlight unit may include a light source, a reflector, an adjustment bolt, and a nut. The reflector may forwardly reflect light emitted from the light source. The adjustment bolt may extend forward from the adjustment portion. The nut may be screwed onto the adjustment bolt. The nut may be connected to an upper surface of the reflector. In this case, the angle of the reflector is changed by operating the adjustment portion, whereby the optical axis is adjusted. Because of this, a space produced in the interior of the handle cover for disposing the headlight unit can be made compact in comparison with when the angle of the entire headlight unit is changed. Accordingly, increase in size of the handle cover can be inhibited.

The opening may be shaped to taper forward as seen in the vehicle side view. The adjustment portion may be located in part at same height as a front end of the opening. In this case, when a front portion of the opening is made as narrow as possible, intrusion of water can be prevented, while workability can be kept good for the adjustment portion.

Overall, according to the present invention, it is possible to inhibit increase in size of a handle cover and simultaneously enhance workability in adjusting an optical axis in a straddled vehicle.

### BRIEF DESCRIPTION OF THE DRAWINGS

FIG. 1 is a side view of a straddled vehicle according to an embodiment.
FIG. 2 is a front view of the straddled vehicle.
FIG. 3 is a front view of a handle cover.
FIG. 4 is a side view of the handle cover.
FIG. 5 is a top view of the handle cover.
FIG. 6 is a rear view of the handle cover.
FIG. 7 is a side view of a first headlight unit.
FIG. 8 is a rear view of the first headlight unit.
FIG. 9 is a cross-sectional view of FIG. 6 taken along line IX-IX.
FIG. 10 is a cross-sectional view of FIG. 6 taken along line X-X.
FIG. 11 is a cross-sectional view of FIG. 6 taken along line XI-XI.
FIG. 12 is an enlarged side view of the handle cover.
FIG. 13 is a rear view of the handle cover and the first headlight unit.
FIG. 14 is an enlarged side view of a handle cover according to another embodiment.

### DETAILED DESCRIPTION OF EMBODIMENTS

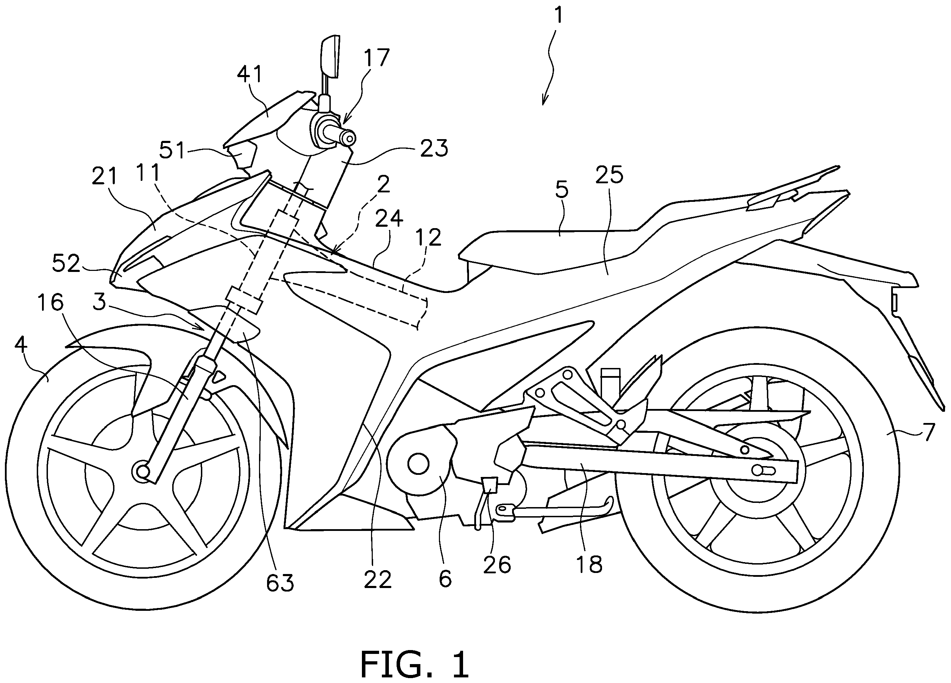

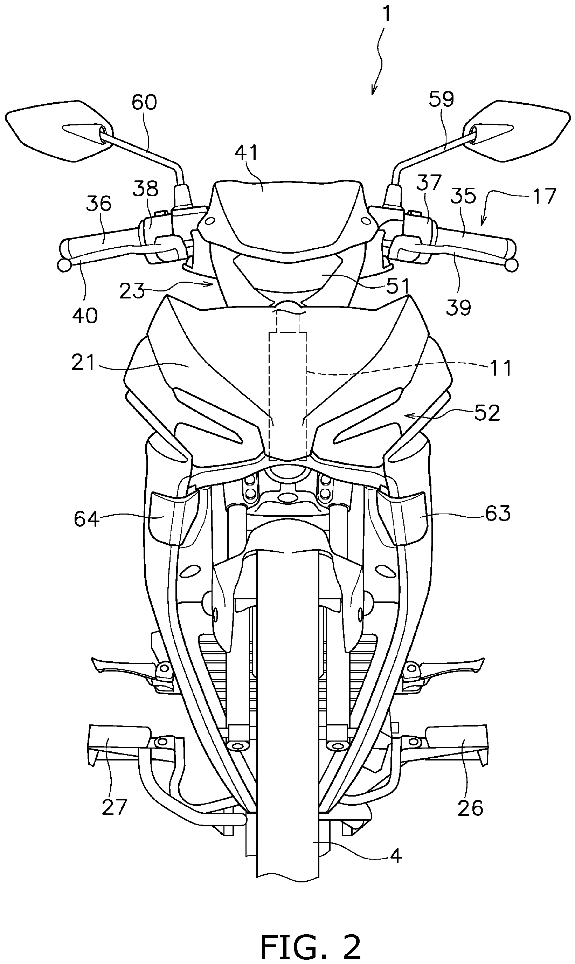

A straddled vehicle according to an embodiment of the present invention will be hereinafter explained with reference to drawings. FIG. 1 is a side view of a straddled vehicle 1 according to the embodiment. FIG. 2 is a front view of the straddled vehicle 1. As shown in FIG. 2, the straddled vehicle 1 according to the present embodiment is a moped-type vehicle. As shown in FIG. 1, the straddled vehicle 1 includes a vehicle body frame 2, a steering device 3, a front wheel 4, a seat 5, a power unit 6, and a rear wheel 7. It should be noted that in the following explanation, front, rear, right, and left directions are defined as indicating front, rear, right, and left directions seen from a driver seated on the seat 5.

The vehicle body frame 2 includes a head pipe 11 and a main frame 12. The head pipe 11 is disposed in the middle of the vehicle in a right-and-left direction. The head pipe 11 extends forward and downward. The main frame 12 extends backward from the head pipe 11.

The steering device 3 is supported by the head pipe 11 so as to be turnable. The steering device 3 supports the front wheel 4 such that the front wheel 4 is rotatable. The steering device 3 includes a front fork 16 and a handle member 17. The front fork 16 is supported by the head pipe 11 so as to be turnable. The front wheel 4 is supported by the front fork 16 so as to be rotatable. The handle member 17 can be operated by the driver in order to turn the front wheel 4. The handle member 17 is connected to the front fork 16. The handle member 17 extends in the right-and-left direction.

The seat 5 is disposed behind the head pipe 11. The seat 5 is disposed above the main frame 12. The power unit 6 is disposed below the seat 5. The power unit 6 includes, for instance, an internal combustion engine. Alternatively, the power unit 6 may include an electric motor. The power unit 6 is supported by the main frame 12. The rear wheel 7 is supported by a swing arm 18 so as to be rotatable. The swing arm 18 is supported by either the main frame 12 or the power unit 6 so as to be swingable.

The straddled vehicle 1 includes a front cover 21, a leg shield 22, a handle cover 23, a center cover 24, and a side cover 25. The front cover 21 is fixed to the vehicle body frame 2. The front cover 21 is disposed in front of and on the laterally right and left of the head pipe 11. The front cover 21 is disposed below the handle cover 23.

The leg shield 22 is disposed behind the front cover 21. The leg shield 22 is disposed in front of footrests 26 and 27. Each footrest 26, 27 is made in the shape of a rod. The footrests 26 and 27 are disposed on the lateral sides of the power unit 6. The leg shield 22 extends from a lower position than the footrests 26 and 27 to an upper position than the footrests 26 and 27. The leg shield 22 extends to a corresponding position to the height of the center cover 24.

The handle cover 23 covers part of the handle member 17. The handle cover 23 is located on an upper side than the front cover 21. The handle cover 23 is located on an upper side than the head pipe 11. The handle cover 23 is turnable together with the handle member 17 with respect to the front cover 21. The center cover 24 is disposed between the front cover 21 and the seat 5. The center cover 24 is disposed in front of the seat 5. The side cover 25 is disposed below the seat 5.

The straddled vehicle 1 includes a first headlight unit 51, a second headlight unit 52, and flashers 63 and 64. The first and second headlight units 51 and 52 are separated from each other. The first and second headlight units 51 and 52 are disposed away from each other. The first headlight unit 51 is provided in the handle cover 23. The first headlight unit 51 is turned together with the handle cover 23. The second headlight unit 52 is provided in the front cover 21. The flashers 63 and 64 are provided in the front cover 21.

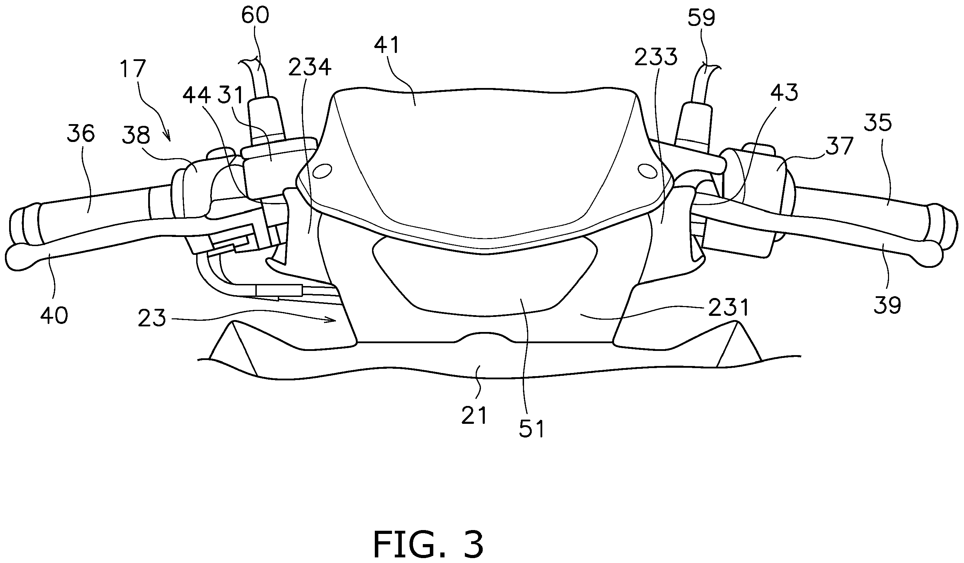

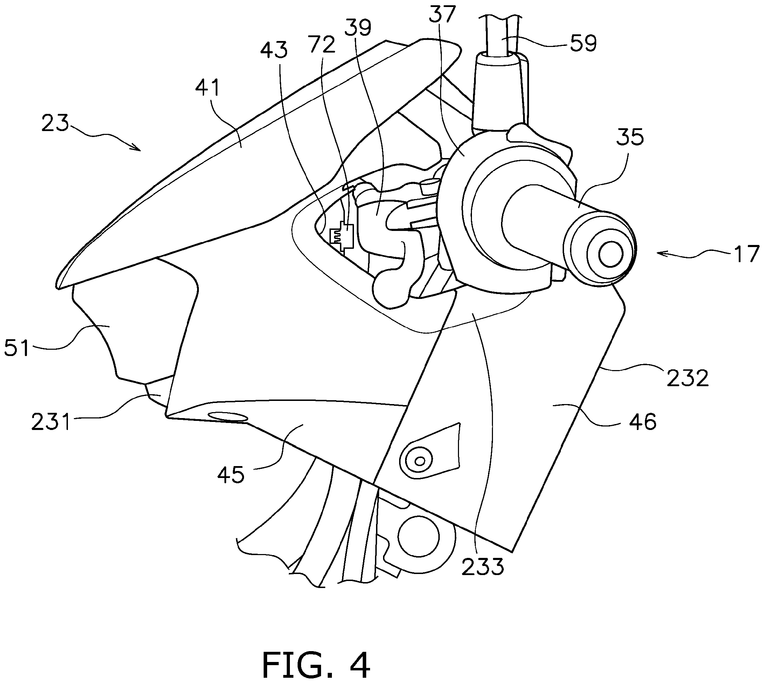

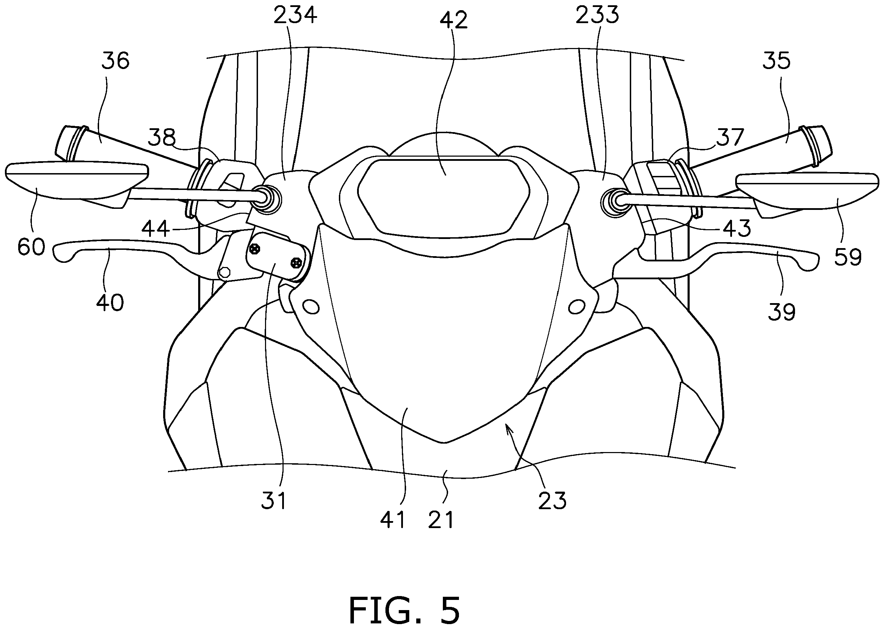

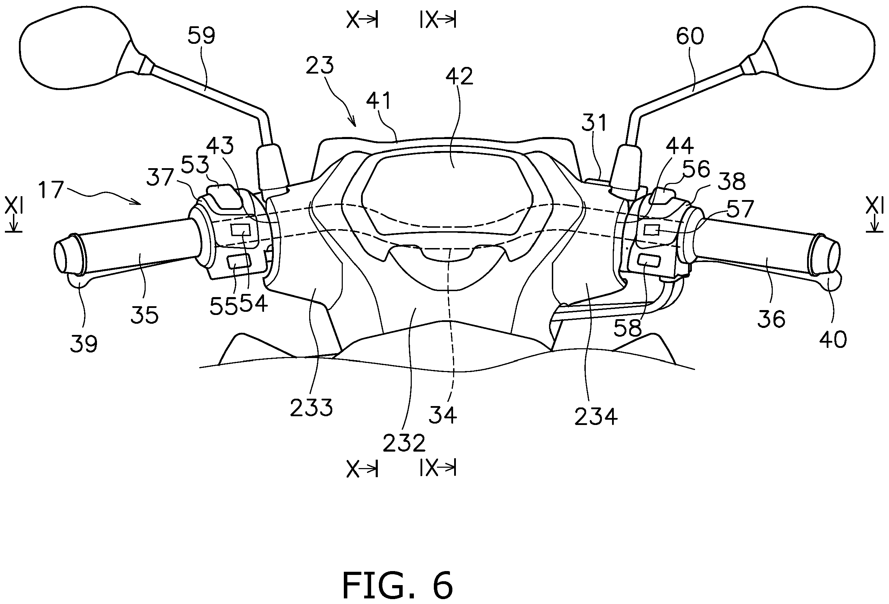

FIG. 3 is a front view of the handle cover 23. FIG. 4 is a side view of the handle cover 23. FIG. 5 is a top view of the handle cover 23. FIG. 6 is a rear view of the handle cover 23. As shown in FIGS. 2 to 6, the handle member 17 includes a handlebar 34, a left grip 35, a right grip 36, a left operating portion 37, and a right operating portion 38. The handlebar 34 is connected to the front fork 16. The handlebar 34 extends in the right-and-left direction. The left grip 35 is made in the shape of a tube. The left grip 35 is attached to the left end of the handlebar 34. The left operating portion 37 is separated from the handle cover 23. The left operating portion 37 is attached to the handlebar 34. The left operating portion 37 is disposed laterally inside the left grip 35. The right grip 36 is made in the shape of a tube. The right grip 36 is attached to the right end of the handlebar 34. The right operating portion 38 is separated from the handle cover 23. The right operating portion 38 is attached to the handlebar 34. The right operating portion 38 is disposed laterally inside the right grip 36. It should be noted that only one of the left and right operating portions 37 and 38 may be separated from the handle cover 23 and be attached to the handlebar 34. It should be herein noted that the other of the left and right operating portions 37 and 38 may be attached to the handle cover 23.

The straddled vehicle 1 includes a left lever 39 and a right lever 40. The left lever 39 is disposed in front of the left grip 35 and the left operating portion 37. The left lever 39 is attached to the handle member 17. The left lever 39 is operable back and forth. The left lever 39 is, for instance, a clutch lever. The right lever 40 is disposed in front of the right grip 36 and the right operating portion 38. The right lever 40 is attached to the handle member 17. The right lever 40 is operable back and forth. The right lever 40 is, for instance, a brake lever. A master cylinder 31 is attached to the right lever 40.

As shown in FIG. 6, switches 53 to 58, operable by the driver, are disposed on the left and right operating portions 37 and 38. For example, the switches 53 to 58 include a flasher switch, a horn switch, high-beam and low-beam switches, a starter switch, and a kill switch. A left mirror 59 and a right mirror 60 are attached to the handle member 17. The left mirror 59 is disposed laterally inside the left operating portion 37. The right mirror 60 is disposed laterally inside the right operating portion 38. The left and right mirrors 59 and 60 protrude upward from the handle cover 23.

The handle cover 23 covers the handlebar 34. The handlebar 34 protrudes rightward and leftward from the handle cover 23. The handle cover 23 is disposed between the left grip 35 and the right grip 36. The handle cover 23 is disposed in front of, behind, above, and on the right and left of the handlebar 34. When described in detail, the handle cover 23 includes a front portion 231, a rear portion 232, a left lateral portion 233, and a right lateral portion 234. The front portion 231 is disposed in front of the handlebar 34. A wind shield 41 is attached to the front portion 231. The rear portion 232 is disposed behind the handle member 17. A meter panel 42 is attached to the rear portion 232. The meter panel 42 includes a speedmeter.

The left lateral portion 233 is connected to the front portion 231 and the rear portion 232. The left lateral portion 233 is shaped to protrude leftward. The left lateral portion 233 includes a left opening 43. The left opening 43 faces left. The handle member 17 and the left lever 39 protrude leftward from the left opening 43. As seen in the vehicle side view, the left opening 43 is shaped to taper forward. As seen in the vehicle side view, the left opening 43 extends to a more front position than a movable range of the left lever 39. The drawings show a position of the left lever 39 located on the most front side. As seen in the vehicle side view, the left opening 43 extends to a more front position than the most front-side position of the left lever 39.

The right lateral portion 234 is connected to the front portion 231 and the rear portion 232. The right lateral portion 234 is shaped to protrude laterally outward. The right lateral portion 234 includes a right opening 44. The right opening 44 faces right. The handle member 17 and the right lever 40 protrude rightward from the right opening 44.

The handle cover 23 is shaped to be split back and forth. As shown in FIG. 4, the handle cover 23 includes a front cover member 45 and a rear cover member 46. The front and rear cover members 45 and 46 are separated from each other. The front cover member 45 includes the front portion 231, part of the left lateral portion 233, and part of the right lateral portion 234. The rear cover member 46 includes the rear portion 232, part of the left lateral portion 233, and part of the right lateral portion 234. The left opening 43 is delimited by an edge of the front cover member 45 and an edge of the rear cover member 46. The right opening 44 is delimited by an edge of the front cover member 45 and an edge of the rear cover member 46.

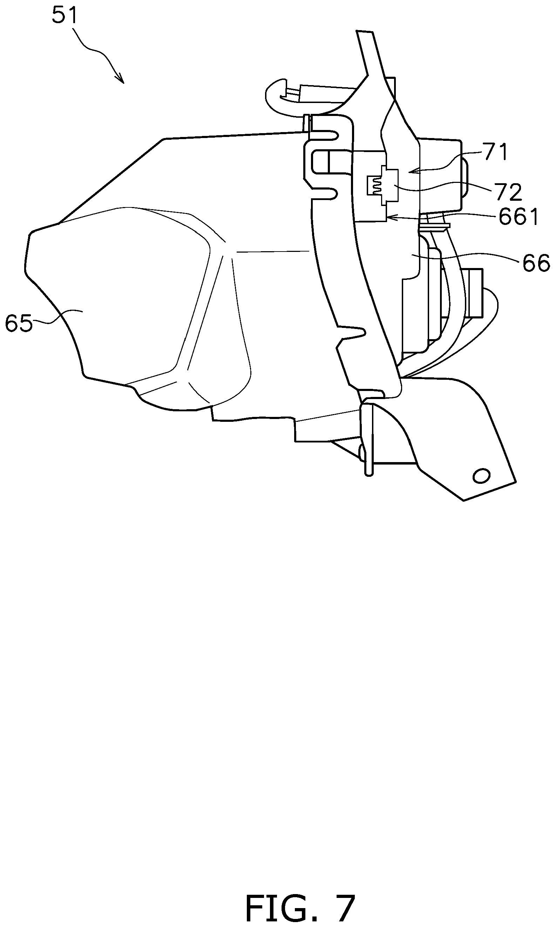

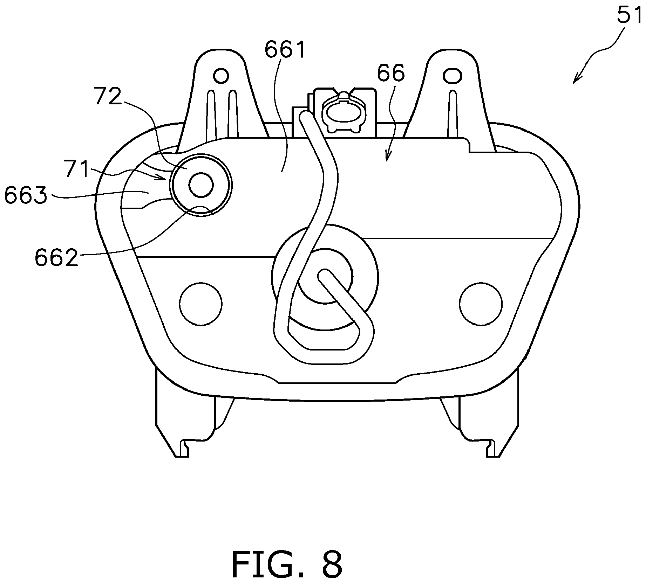

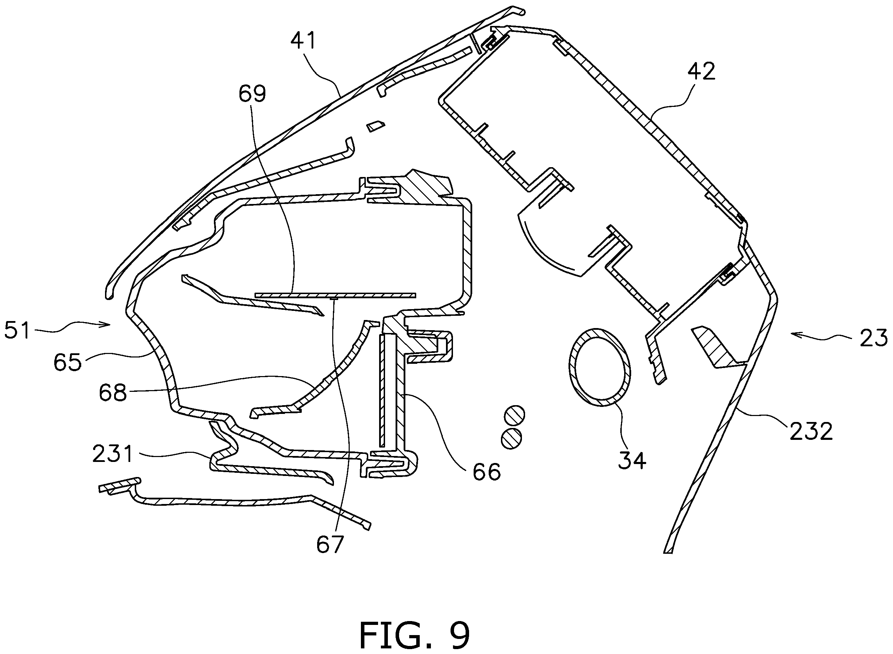

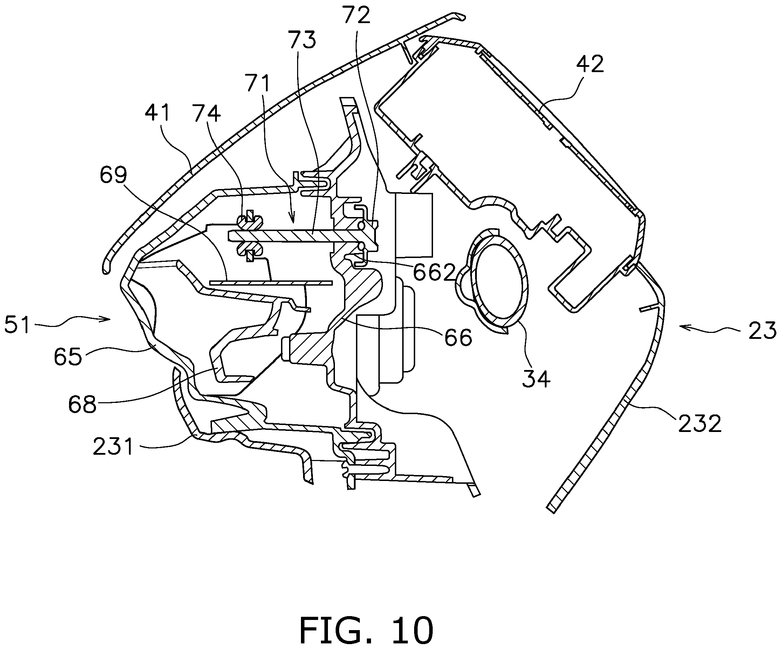

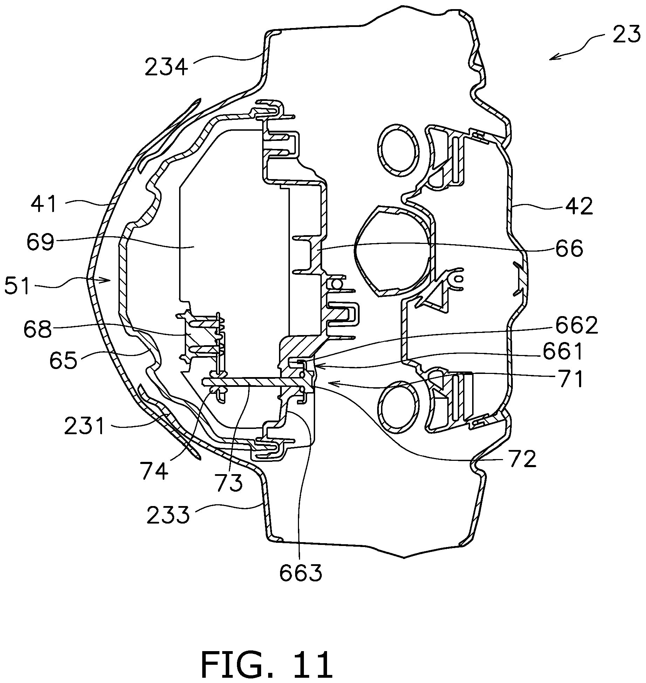

FIG. 7 is a side view of the first headlight unit 51. FIG. 8 is a rear view of the first headlight unit 51. FIG. 9 is a cross-sectional view of FIG. 6 taken along line IX-IX. FIG. 10 is a cross-sectional view of FIG. 6 taken along line X-X. FIG. 11 is a cross-sectional view of FIG. 6 taken along line XI-XI.

As shown in FIGS. 7 to 11, the first headlight unit 51 includes a clear cover 65, a housing 66, a light source 67, and a reflector 68. The light source 67 is, for instance, an LED. The light source 67 is attached to a board 69. Alternatively, the light source 67 may be a light bulb. The reflector 68 includes a curved mirror surface. The reflector 68 forwardly reflects light emitted from the light source 67. The clear cover 65 is disposed at least in part in front of the reflector 68. The clear cover 65 causes the light emitted from the light source 67 to pass therethrough. The housing 66 is disposed behind the clear cover 65, the light source 67, and the reflector 68.

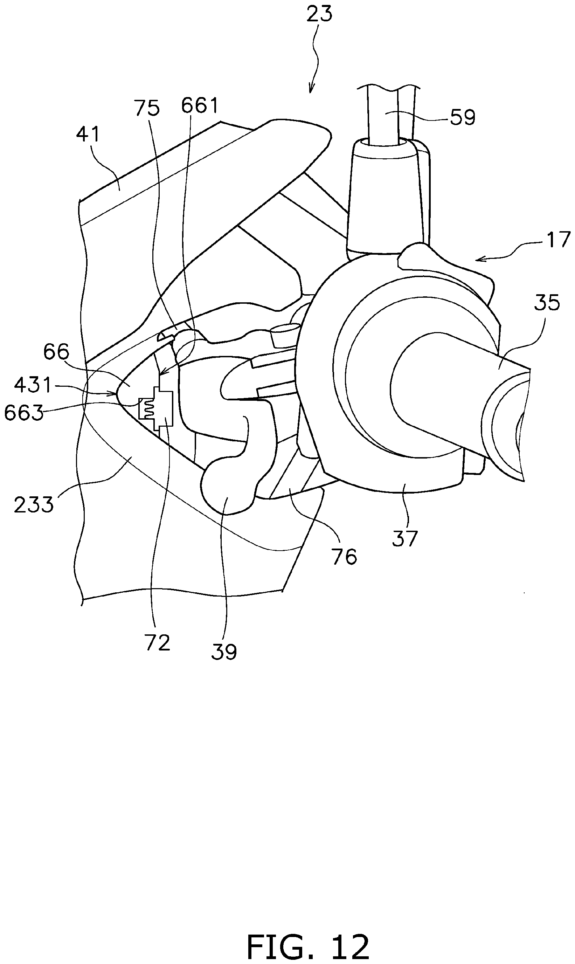

FIG. 12 is an enlarged side view of the handle cover 23. As shown in FIG. 12, a rear surface 661 of the housing 66 is located in part on a more front side than the left lever 39. In other words, as seen in the vehicle side view, a rear surface of the first headlight unit 51 is located in part on a more front side than the left lever 39. As seen in the vehicle side view, the rear surface of the first headlight unit 51 overlaps in part the left opening 43.

As shown in FIGS. 10 and 11, the first headlight unit 51 includes an optical axis adjusting mechanism 71. The optical axis adjusting mechanism 71 is a mechanism for adjusting the orientation of the optical axis of the first headlight unit 51. The optical axis adjusting mechanism 71 changes the angle of the reflector 68 so as to adjust the optical axis. The optical axis adjusting mechanism 71 includes an adjustment portion 72, an adjustment bolt 73, and a nut 74.

The adjustment portion 72 is operable by a tool in order to adjust the optical axis of the first headlight unit 51. The adjustment portion 72 is disposed on the rear surface 661 of the housing 66. The rear surface 661 of the housing 66 includes a recess 662 and a groove 663. The recess 662 and the groove 663 are shaped to be recessed forward. The adjustment portion 72 is disposed within the recess 662. The groove 663 extends laterally outward from the recess 662. The adjustment portion 72 has a shape of a disc. The adjustment portion 72 has a zigzag-shaped lateral surface. When the tool is turned while being engaged with the zigzag-shaped lateral surface of the adjustment portion 72, the adjustment portion 72 is rotated about the axis of the adjustment bolt 73.

The adjustment bolt 73 is connected to the adjustment portion 72. The adjustment bolt 73 extends forward from the adjustment portion 72. The adjustment bolt 73 is rotated unitarily with the adjustment portion 72. The nut 74 is disposed in the interior of the clear cover 65 and the housing 66. The nut 74 is screwed onto the adjustment bolt 73. The nut 74 is connected to the upper surface of the reflector 68. The nut 74 is connected to the reflector 68 at an upper position than the light source 67. The nut 74 is moved back and forth in conjunction with rotation of the adjustment portion 72 and the adjustment bolt 73. Accordingly, an upper portion of the reflector 68 is moved back and forth, whereby the angle of the reflector 68 is changed.

As shown in FIG. 12, the adjustment portion 72 is disposed in place to be visible from the left opening 43. When described in detail, as seen in as seen in the vehicle side view, the adjustment portion 72 is visible through the left opening 43. As seen in the vehicle side view, the adjustment portion 72 is disposed in place to overlap the left opening 43. As seen in the vehicle side view, the adjustment portion 72 is disposed in place not to overlap the movable range of the left lever 39. As seen in the vehicle side view, the adjustment portion 72 is located on a more front side than the most front-side position of the left lever 39. As seen in the vehicle side view, the adjustment portion 72 is disposed between the left lever 39 and a front end 431 of the left opening 43. As seen in the vehicle side view, the adjustment portion 72 is located in part at the same height as the front end 431 of the left opening 43. As seen in the vehicle side view, the front end 431 of the left opening 43 is located on a more front side than the adjustment portion 72.

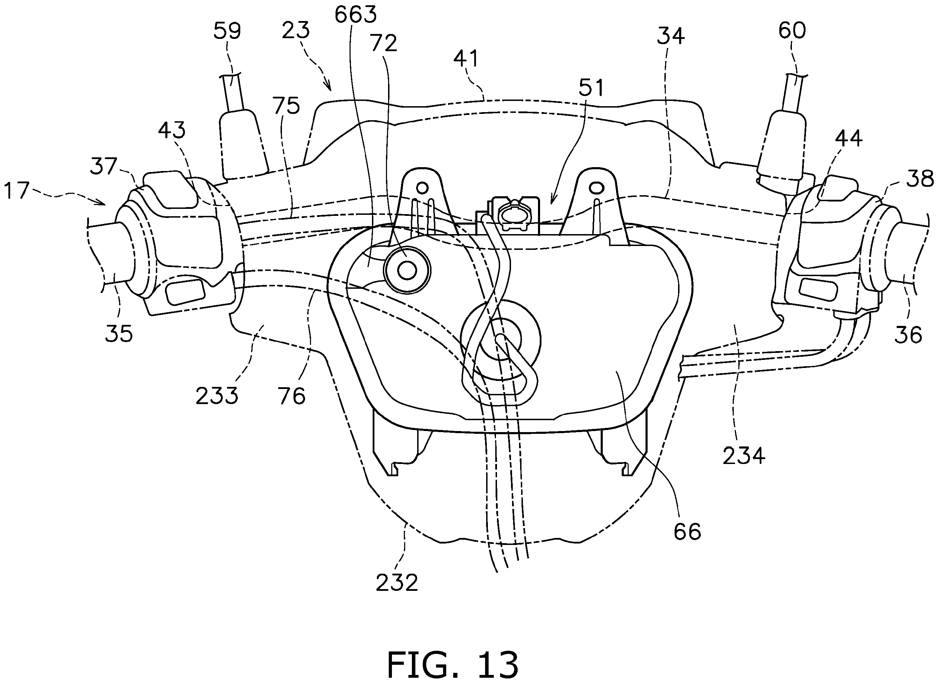

FIG. 13 is a rear view of the handle cover 23 and the first headlight unit 51. As shown in FIG. 13, a cable 75 is connected to the left lever 39. As shown in FIG. 12, the cable 75 extends from the left lever 39 into the interior of the handle cover 23. The cable 75 is, for instance, a clutch cable. The cable 75 is pulled and pushed in conjunction with action of the left lever 39. As shown in FIG. 13, the cable 75 runs above the adjustment portion 72. The cable 75 bents downward at a laterally inner position than the adjustment portion 72. As seen in the vehicle side view, the adjustment portion 72 is disposed in place not to overlap the cable 75.

A harness 76 is connected to the left operating portion 37. The harness 76 extends from the left operating portion 37 into the interior of the handle cover 23. The harness 76 is disposed at least in part along the handle member 17. The harness 76 runs below the adjustment portion 72. As seen in the vehicle side view, the adjustment portion 72 is disposed in place not to overlap the harness 76.

In the straddled vehicle 1 according to the present embodiment explained above, the adjustment portion 72 is visible through the left opening 43, through which the handle member 17 and the left lever 39 are inserted. In other words, a tool path is reliably produced by utilizing a space for laying the handle member 17 and the left lever 39. Accordingly, increase in size of the handle cover 23 can be inhibited. Besides, the left opening 43 for inserting the handle member 17 and the left lever 39 is larger than an opening conventionally provided for inserting a tool. Because of this, the adjustment portion 72 is easily visible through the left opening 43. Accordingly, workability can be enhanced in adjusting the optical axis.

Moreover, due to the large-sized left opening 43, the optical axis can be checked, while the adjustment portion 72 is visually observed and adjusted through the left opening 43. Because of this, workability can be further enhanced in adjusting the optical axis. For example, the optical axis of the first headlight unit 51 is adjustable, while the adjustment portion 72 is adjusted by the tool, with the handle member 17 being disposed in the middle position. Because of this, it is possible to reduce the number of steps required for adjusting the optical axis.

The straddled vehicle 1 is not limited to the moped-type vehicle, and alternatively, may be another type of vehicle such as a scooter. The structure of the straddled vehicle 1 is not limited to that in the embodiment described above and may be changed, while still falling under the scope of claim 1. For example, the straddled vehicle 1 may have a structure with a flat footboard provided in front of the seat 5. The flat footboard may be entirely flat in the right-and-left direction of the straddled vehicle 1.

The number of front wheels is not limited to one, and alternatively, may be greater than one. The number of rear wheels is not limited to one, and alternatively, may be greater than one. The structure of the vehicle body frame 2 is not limited to that in the embodiment described above and may be For example, the main frame 12 may be changed in shape. The left lever 39 is not limited to the clutch lever, and alternatively, may be another type of lever such as a brake lever. The second headlight may be omitted.

The shape of the handle cover 23 is not limited to that in the embodiment described above and may be changed, while still falling under the scope of claim 1. For example, the handle cover 23 may be split in a different position from the above. The left opening 43 may be changed in position or shape. Only one of the handle member 17 and the left lever 39 may protrude from the left opening 43. For example, the handle member 17 may protrude from the left opening 43, whereas the left lever 39 may protrude from another opening different from the left opening 43. Contrarily, the left lever 39 may protrude from the left opening 43, whereas the handle member 17 may protrude from another opening different from the left opening 43.

The structure of the first headlight unit 51 is not limited to that in the embodiment described above and may be changed, while still falling under the scope of claim 1. The adjustment portion 72 disposed in place to be visible through the right opening 44.

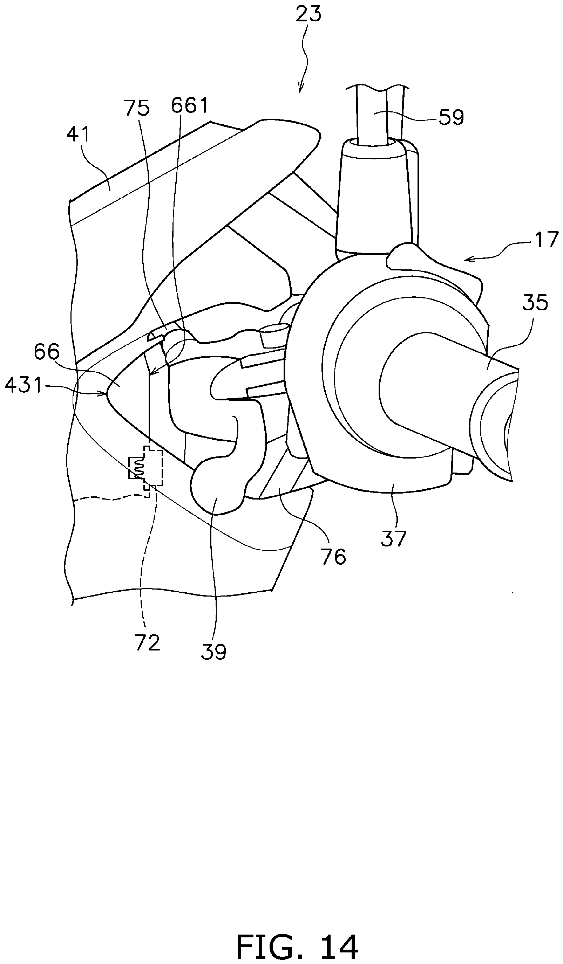

The adjustment portion 72 may be disposed in place to be visible through the left opening 43 as seen not only in a horizontal direction but also in an oblique direction slanting with respect to the horizontal direction. For example, the adjustment portion 72 may be disposed in place to be visible through the left opening 43 as seen in a direction slating upward with respect to the horizontal direction. In this case, as shown in FIG. 14, the adjustment portion 72 may be located on a lower side than the left opening 43. As seen in the vehicle side view, the adjustment portion 72 may overlap the handle cover 23. Even in such a condition, the adjustment portion 72 is visible through the left opening 43 as seen in the direction slanting upward with respect to the horizontal direction. Alternatively, the adjustment portion 72 may be disposed in place to be visible through the left opening 43 as seen in a direction slanting downward with respect to the horizontal direction. Yet alternatively, the adjustment portion 72 may be disposed in place to be visible through the left opening 43 as seen in a direction slanting forward with respect to the horizontal direction. Still alternatively, the adjustment portion 72 may be disposed in place to be visible through the left opening 43 as seen in a direction slanting backward with respect to the horizontal direction.

### REFERENCE SIGNS LIST

11 ... head pipe, 16···front fork, 21···front cover, 22···leg shield, 4···front wheel, 17···handle member, 39···left lever, 231···front portion, 232···rear portion, 233···left lateral portion, 23 ... handle cover, 51···first headlight unit, 43···left opening, 72···adjustment portion, 53-5···switches, 34···handlebar, 35···left grip, 37···left operating portion, 75···cable, 76···harness, 67···light source, 68···reflector, 73···adjustment bolt, 74···nut

## Claims

1. A straddled vehicle (1) comprising:
ahead pipe (11);
a front fork (16) turnably supported by the head pipe (11);
a front cover (21) disposed in front of the head pipe (11);
a leg shield (22) disposed behind the front cover (21);
a front wheel (4) rotatably supported by the front fork (16);
a handle member (17) connected to the front fork (16);
a lever (39) attached to the handle member (17);
a handle cover (23) turned together with the handle member (17), the handle cover (23) including a front portion (231), a rear portion (232), and a lateral portion (233), the front portion (231) being disposed in front of the handle member (17), the rear portion (232) being disposed behind the handle member (17), the lateral portion (233) connecting the front portion (231) and the rear portion (232); and
a headlight unit (51) provided in the handle cover (23), wherein
the lateral portion (233) of the handle cover (23) includes an opening (43),
the handle member (17) and the lever (39) protrude from the opening (43),
the headlight unit (51) includes an adjustment portion (72) operable to adjust an optical axis of the headlight unit (51), and
the adjustment portion (72) is disposed in place to be visible through the opening (43);
**characterized in that** a tool path is produced by utilizing a space for laying said handle member (17) and said lever (39); said tool path being a space for inserting a tool from said opening (43) to said adjustment portion (72).

2. The straddled vehicle according to claim 1, wherein the adjustment portion (72) is disposed in place to overlap the opening (43) as seen in a vehicle side view.

3. The straddled vehicle according to claim 1 or 2, wherein
the lever (39) protrudes from the opening (43), and
the adjustment portion (72) is disposed in place not to overlap a movable range of the lever (39) as seen in the vehicle side view.

4. The straddled vehicle according to any of claims 1 to 3, wherein the adjustment portion (72) is visible through the opening (43) as seen in the vehicle side view.

5. The straddled vehicle according to any of claims 1 to 4, further comprising:
a switch (53, 58) operable by a driver, wherein
the handle member (17) includes
a handlebar (34),
a grip (35) attached to the handlebar (34), and
an operating portion (37) attached to the handlebar (34), the operating portion (37) being disposed lateral to the grip (35), and
the switch (53, 58) is disposed on the operating portion (37).

6. The straddled vehicle according to any of claims 1 to 5, further comprising:
a cable (75) extending from the lever (39) into an interior of the handle cover (23), wherein
the cable (75) runs above the adjustment portion (72).

7. The straddled vehicle according to claim 6, wherein the cable (75) bends downward at a laterally inner position than the adjustment portion (72).

8. The straddled vehicle according to any of claims 1 to 7, further comprising:
a harness (76) disposed at least in part along the handle member (17), wherein
the harness (76) runs below the adjustment portion (72).

9. The straddled vehicle according to any of claims 1 to 8, wherein
the adjustment portion (72) is disposed on a rear surface (661) of the headlight unit (51), and
the rear surface (661) of the headlight unit (51) is located at least in part on a more front side than the lever as seen in the vehicle side view.

10. The straddled vehicle according to any of claims 1 to 9, wherein
the headlight unit (51) includes
a light source (67),
a reflector (68) configured to forwardly reflect light emitted from the light source (67),
an adjustment bolt (73) extending forward from the adjustment portion (72), and
a nut (74) screwed onto the adjustment bolt (73), and
the nut (74) being connected to an upper surface of the reflector (68).

11. The straddled vehicle according to any of claims 1 to 10, wherein
the opening (43) is shaped to taper forward as seen in the vehicle side view, and
the adjustment portion (72) is located in part at same height as a front end of the opening (43).

## Patentansprüche

1. Grätschsitzfahrzeug (1), umfassend:
ein Steuerkopfrohr (11);
eine Vordergabel (16), die drehbar an dem Steuerkopfrohr (11) gelagert ist;
eine vordere Abdeckung (21), die vor dem Steuerkopfrohr (11) angeordnet ist;
eine Beinabschirmung (22), die hinter der vorderen Abdeckung (21) angeordnet ist;
ein Vorderrad (4), das drehbar an der Vordergabel (16) gelagert ist;
ein Griffelement (17), das mit der Vordergabel (16) verbunden ist;
einen Hebel (39), der an dem Griffelement (17) befestigt ist;
eine Griffabdeckung (23), die zusammen mit dem Griffelement (17) gedreht wird, wobei die Griffabdeckung (23) einen vorderen Abschnitt (231), einen hinteren Abschnitt (232) und einen seitlichen Abschnitt (233) aufweist, wobei der vordere Abschnitt (231) vor dem Griffelement (17) angeordnet ist, der hintere Abschnitt (232) hinter dem Griffelement (17) angeordnet ist und der seitliche Abschnitt (233) den vorderen Abschnitt (231) und den hinteren Abschnitt (232) verbindet; und
eine Scheinwerfereinheit (51), die in der Griffabdeckung (23) vorgesehen ist, wobei
der seitliche Abschnitt (233) der Griffabdeckung (23) eine Öffnung (43) aufweist,
das Griffelement (17) und der Hebel (39) aus der Öffnung (43) herausragen,
die Scheinwerfereinheit (51) einen Einstellabschnitt (72) aufweist, der zum Einstellen einer optischen Achse der Scheinwerfereinheit (51) dient, und
der Einstellabschnitt (72) so angeordnet ist, dass er durch die Öffnung (43) sichtbar ist;
**dadurch gekennzeichnet, dass** ein Werkzeugweg durch Verwendung eines Raums zum Anordnen des Griffelements (17) und des Hebels (39) erzeugt wird; wobei der Werkzeugweg ein Raum zum Einführen eines Werkzeugs von der Öffnung (43) zu dem Einstellabschnitt (72) ist.

2. Grätschsitzfahrzeug nach Anspruch 1, bei dem der Einstellabschnitt (72) so angeordnet ist, dass er die Öffnung (43) in der Seitenansicht des Fahrzeugs überlappt.

3. Grätschsitzfahrzeug nach Anspruch 1 oder 2, bei dem der Hebel (39) aus der Öffnung (43) herausragt, und
der Einstellabschnitt (72) so angeordnet ist, dass er einen beweglichen Bereich des Hebels (39), wie in der Seitenansicht des Fahrzeugs gesehen, nicht überlappt.

4. Grätschsitzfahrzeug nach einem der Ansprüche 1 bis 3, bei dem der Einstellabschnitt (72) in der Seitenansicht des Fahrzeugs durch die Öffnung (43) sichtbar ist.

5. Grätschsitzfahrzeug nach einem der Ansprüche 1 bis 4, weiterhin umfassend:
einen Schalter (53, 58), der von einem Fahrer betätigt werden kann, wobei
das Griffelement (17) umfasst:
eine Lenkstange (34),
einen an der Lenkstange (34) angebrachten Griff (35), und
einen an der Lenkstange (34) angebrachten Betätigungsabschnitt (37), wobei
der Betätigungsabschnitt (37) seitlich des Griffs (35) angeordnet ist, und der Schalter (53, 58) auf dem Betätigungsabschnitt (37) angeordnet ist.

6. Grätschsitzfahrzeug nach einem der Ansprüche 1 bis 5, weiterhin umfassend:
ein Kabel (75), das sich von dem Hebel (39) in das Innere der Griffabdeckung (23) erstreckt, wobei das Kabel (75) oberhalb des Einstellabschnitts (72) verläuft.

7. Grätschsitzfahrzeug nach Anspruch 6, bei dem das Kabel (75) an einer seitlich inneren Position als der Einstellabschnitt (72) nach unten gebogen ist.

8. Grätschsitzfahrzeug nach einem der Ansprüche 1 bis 7, weiterhin umfassend:
einen Gurt (76), der wenigstens teilweise entlang des Griffelements (17) angeordnet ist, wobei der Gurt (76) unterhalb des Einstellabschnitts (72) verläuft.

9. Grätschsitzfahrzeug nach einem der Ansprüche 1 bis 8, bei dem
der Einstellabschnitt (72) auf einer hinteren Fläche (661) der Scheinwerfereinheit (51) angeordnet ist, und die hintere Fläche (661) der Scheinwerfereinheit (51) wenigstens teilweise auf einer weiter vorn befindlichen Seite als der Hebel, wie in der Fahrzeugseitenansicht gesehen, angeordnet ist.

10. Grätschsitzfahrzeug nach einem der Ansprüche 1 bis 9, bei dem
die Scheinwerfereinheit (51) umfasst:
eine Lichtquelle (67),
einen Reflektor (68), der dazu eingerichtet ist, von der Lichtquelle (67) ausgestrahltes Licht nach vorne zu reflektieren,
eine Einstellschraube (73), die sich von dem Einstellabschnitt (72) nach vorne erstreckt, und
eine Mutter (74), die auf die Einstellschraube (73) geschraubt ist,
wobei die Mutter (74) mit einer oberen Fläche des Reflektors (68) verbunden ist.

11. Grätschsitzfahrzeug nach einem der Ansprüche 1 bis 10, bei dem
die Öffnung (43) derart geformt ist, dass sie sich in der Seitenansicht des Fahrzeugs nach vorne verjüngt, und
sich der Einstellabschnitt (72) zum Teil auf gleicher Höhe wie ein vorderes Ende der Öffnung (43) befindet.

## Revendications

1. Véhicule à enfourcher (1) comprenant :
un tube avant (11) ;
une fourche avant (16) supportée par le tube avant (11) ;
un capot avant (21) disposé devant le tube avant (11) ;
un protège-jambes (22) disposé derrière le capot avant (21) ;
une roue avant (4) supportée de manière rotative par la fourche avant (16) ;
une poignée (17) reliée à la fourche avant (16) ;
un levier (39) fixé à l'élément de poignée (17) ;
un capot de poignée (23) tourné avec l'élément de poignée (17), le capot de poignée (23) comprenant une partie avant (231), une partie arrière (232) et une partie latérale (233), la partie avant (231) étant disposée devant l'élément de poignée (17), la partie arrière (232) étant disposée derrière l'élément de poignée (17), la partie latérale (233) reliant la partie avant (231) et la partie arrière (232) ; et
un phare (51) placé dans le capot de poignée (23), dans lequel
la partie latérale (233) du capot de poignée (23) comprend une ouverture (43),
l'élément de poignée (17) et le levier (39) font saillie par rapport à l'ouverture (43),
le phare (51) comprend une partie réglage (72) permettant d'ajuster un axe optique du phare (51), et
la partie réglage (72) est disposée de manière à être visible à travers l'ouverture (43) ;
**caractérisé en ce qu'**un parcours d'outil est produit en utilisant un espace pour poser ledit élément de poignée et ledit levier (39) ; ledit parcours d'outil est un espace pour insérer un outil depuis ladite ouverture (43) jusqu'à ladite partie réglage (72).

2. Véhicule à enfourcher selon la revendication 1, dans lequel la partie réglage (72) est disposée de manière à chevaucher l'ouverture (43) vue sur le côté du véhicule.

3. Véhicule à enfourcher selon les revendications 1 ou 2, dans lequel
le levier (39) dépasse de l'ouverture (43), et
la partie réglage (72) est disposée de manière à ne pas chevaucher une plage mobile du levier (39), comme on peut le voir dans la vue latérale du véhicule.

4. Véhicule à enfourcher selon l'une des revendications 1 à 3, dans lequel la partie réglage (72) est visible à travers l'ouverture (43) vue du côté du véhicule.

5. Véhicule à enfourcher selon l'une des revendications 1 à 4, comprenant en outre :
un interrupteur (53, 58) actionnable par un conducteur, dans lequel
l'élément de poignée (17) comprend
un guidon (34),
une poignée (35) fixée au guidon (34), et
une partie commande (37) fixée au guidon (34), la partie commande (37) étant disposée latéralement par rapport à la poignée (35), et
l'interrupteur (53, 58) est placé sur la partie commande (37).

6. Véhicule à enfourcher selon l'une des revendications 1 à 5, comprenant en outre :
un câble (75) s'étendant du levier (39) à l'intérieur du capot de poignée (23), dans lequel
le câble (75) passe au-dessus de la partie réglage (72).

7. Véhicule à enfourcher selon la revendication 6, dans lequel le câble (75) se plie vers le bas à une position latérale intérieure par rapport à la partie réglage (72).

8. Véhicule à enfourcher selon l'une des revendications 1 à 7, comprenant en outre :
un harnais (76) disposé au moins en partie le long de l'élément de poignée (17), dans lequel
le harnais (76) passe sous la partie réglage (72).

9. Véhicule à enfourcher selon l'une des revendications 1 à 8, dans lequel
la partie réglage (72) est disposée sur une surface arrière (661) du phare (51), et
la surface arrière (661) du phare (51) est située au moins en partie sur un côté plus avant que le levier tel que vu dans la vue latérale du véhicule.

10. Véhicule à enfourcher selon l'une des revendications 1 à 9, dans lequel
le phare (51) comprend
une source lumineuse (67)
un réflecteur (68) configuré pour réfléchir vers l'avant la lumière émise par la source lumineuse (67),
un boulon de réglage (73) s'étendant vers l'avant de la partie réglage (72), et
un écrou (74) vissé sur le boulon de réglage (73), et
l'écrou (74) étant relié à une surface supérieure du réflecteur (68).

11. Véhicule à enfourcher selon l'une des revendications 1 à 10, dans lequel
l'ouverture (43) est conçue pour se rétrécir vers l'avant en vue latérale du véhicule, et
la partie réglage (72) est située en partie à la même hauteur qu'une extrémité avant de l'ouverture (43).
